# EUROPÄISCHE PATENTANMELDUNG

(11) **EP 2 360 405 A1**
(43) Veröffentlichungstag der Anmeldung: **24.08.2011**
(21) Anmeldenummer: 10001687.2
(22) Anmeldetag: 19.02.2010
(51) Int. Cl.: F16L 19/028, F16L 19/02

(54) **Rohranschlusseinrichtung**

(71) Anmelder: TI Automotive (Heidelberg) GmbH, 69123 Heidelberg (DE)
(72) Erfinder: Weick, Georg, 68723 Planckstadt (DE); Hersel, Walter, Dr., 71229 Leonberg (DE); Fiedler, Uwe, 68766 Hockenheim (DE); Abbott, Sebastian, 69123 Heidelberg (DE)
(74) Vertreter: Rohmann, Michael

(57) **Zusammenfassung**

Rohranschlusseinrichtung für den Anschluss von Rohrleitungen, insbesondere von Kraftfahrzeugrohrleitungen an einem Anschlusselement (8), wobei ein Anschlussfitting (2) vorgesehen ist, der die anzuschließende Rohrleitung (9) im Bereich eines ihrer Rohrleitungsenden umgibt und mit einer stirnseitigen Pressfläche (11) der rückseitigen Fläche (14) eines an dem Rohrleitungsende angeschlossenen Bördels (5) zugewandt ist. Der Bördel weist an seiner Vorderseite eine Dichtfläche (15) auf, wobei die Dichtfläche mittels einer Axialbewegung des Anschlussfittings (2) an eine Anschlussfläche (16) des Anschlusselementes oder an eine zweite Dichtfläche eines zweiten Bördels einer zweiten Rohrleitung anpressbar ist. Fernerhin ist ein Anschlagelement (12) zwischen Anschlussfitting und Anschlussfläche des Anschlusselementes angeordnet, wobei dieses Anschlagelement die Axialbewegung des Anschlussfittings begrenzt beziehungsweise unterbricht.

## Beschreibung

Die Erfindung betrifft eine Rohranschlusseinrichtung für den Anschluss von Rohrleitungen, insbesondere von Kraftfahrzeugrohrleitungen an einem Anschlusselement.

Rohranschlusseinrichtungen der vorstehend genannten Art sind aus der Praxis grundsätzlich bekannt. Dabei wird ein an eine Rohrleitung angeformter Bördel gegen eine Anschlussfläche eines Anschlusselementes gepresst. Der dazu erforderliche Anpressdruck wird mit einem Anschlussfitting aufgebracht, der in das Anschlusselement eingeschraubt und an der Rückseite des Bördels anliegt. Bei den aus der Praxis bekannten Rohranschlusseinrichtungen führt nicht selten ein mehr oder weniger unkontrolliertes Einschrauben des Anschlussfittings zu einer Überbeanspruchung und zu einer Beschädigung des von dem Anschlussfitting beaufschlagten Bördels. Zum anderen kann auch eine unzureichende Verpressung resultieren. Nachteilhafte Leckagen oder Materialschädigungen sind in der Regel die Folge.

Der Erfindung liegt das technische Problem zugrunde, eine Rohranschlusseinrichtung der eingangs genannten Art anzugeben, die die einfache und sichere Herstellung einer fluiddichten Verbindung zwischen einer Rohrleitung und einem Anschlusselement ermöglicht und mit der die vorstehend beschriebenen Nachteile vermieden werden.

Zur Lösung des technischen Problems lehrt die Erfindung eine Rohranschlusseinrichtung für den Anschluss von Rohrleitungen, insbesondere von Kraftfahrzeugrohrleitungen an ein Anschlusselement, wobei ein Anschlussfitting vorgesehen ist, der die anzuschließende Rohrleitung im Bereich eines ihrer Rohrleitungsenden umgibt und mit einer stirnseitigen Pressfläche einer rückseitigen Fläche eines an dem Rohrleitungsende angeschlossenen Bördels zugewandt ist, wobei der Bördel an seiner Vorderseite bzw. Stirnseite eine Dichtfläche aufweist, wobei die Dichtfläche mittels einer Axialbewegung des Anschlussfittings an eine Anschlussfläche des Anschlusselementes oder an eine zweite Dichtfläche eines zweiten Bördels einer zweiten Rohrleitung anpressbar ist, wobei ein Anschlagelement zwischen Anschlussfitting und Anschlussfläche des Anschlusselementes angeordnet ist und wobei dieses Anschlagelement die Axialbewegung des Anschlussfittings begrenzt bzw. unterbricht. Axialbewegung des Anschlussfittings meint eine Bewegung des Anschlussfittings in Richtung der Längsachse L des Anschlussfittings.

Nach sehr bevorzugter Ausführungsform der Erfindung ist das Anschlagelement an der Stirnseite des Anschlussfittings angeschlossen und bei der Axialbewegung des Anschlussfittings ist dieses Anschlagelement an der Anschlussfläche des Anschlusselementes zur Anlage bringbar. Dadurch wird die Axialbewegung des Anschlussfittings begrenzt bzw. unterbrochen. Nach einer anderen Ausführungsform der Erfindung ist das Anschlagelement an der Anschlussfläche des Anschlusselementes angeschlossen. Durch eine Axialbewegung des Anschlussfittings gelangt zweckmäßigerweise die Stirnseite des Anschlussfittings zur Anlage an diesem Anschlagelement des Anschlusselementes und dadurch wird die Axialbewegung des Anschlussfittings begrenzt bzw. unterbrochen. Gemäß einer weiteren Ausführungsform der Erfindung ist das Anschlagelement als separates Anschlagelement zwischen Anschlussfitting und Anschlussfläche angeordnet. Bei dem separaten Anschlagelement handelt es sich insbesondere um einen Anschlagring der zwischen Anschlussfitting und Anschlussfläche angeordnet ist. Dieser Anschlagring begrenzt bzw. unterbricht dann die Axialbewegung des Anschlussfittings.

Nach besonders bevorzugter Ausführungsform der Erfindung liegt der Anschlussfitting im montierten Zustand der Rohranschlusseinrichtung mit seiner stirnseitigen Pressfläche an der rückseitigen Fläche des Bördels an beziehungsweise unmittelbar an. Nach einer weiteren bevorzugten Ausführungsform ist das Anschlagelement beziehungsweise ein Teil des Anschlagelementes im montierten Zustand der Rohranschlusseinrichtung zwischen der stirnseitigen Pressfläche des Anschlussfittings und der rückseitigen Fläche des Bördels angeordnet. Zweckmäßigerweise ist das Anschlagelement dann als separates Anschlagelement ausgebildet. Bei dieser Ausführungsform liegt vorzugsweise die stirnseitige Pressfläche des Anschlussfittings an dem Anschlagelement an und bevorzugt liegt die rückseitige Fläche des Bördels an dem Anschlagelement an.

Eine andere Ausführungsform der Erfindung ist dadurch gekennzeichnet, dass das Anschlagelement an der Rohrleitung angeschlossen ist und insbesondere zwischen Anschlussfitting und rückseitiger Fläche des Bördels die Rohrleitung umgibt. - Nachfolgend wird in erster Linie auf die Ausführungsform Bezug genommen, bei der das Anschlagelement an der Stirnseite des Anschlussfittings angeschlossen ist und bei der Axialbewegung des Anschlagfittings an der Anschlussfläche des Anschlusselementes zur Anlage bringbar ist.

Es liegt im Rahmen der Erfindung, dass die mit dem Anschlussfitting an das Anschlusselement angeschlossene Rohrleitung mit einer weiteren Rohrleitung in Verbindung bzw. in fluidleitende Verbindung gebracht wird. Diese weitere Rohrleitung ist nach einer Ausführungsform als Rohrleitungsabschnitt in das Anschlusselement integriert und mündet zweckmäßigerweise in die Anschlussfläche des Anschlusselementes. Gemäß einer anderen Ausführungsform wird die weitere Rohrleitung als zweite separate Rohrleitung ebenfalls an das Anschlusselement angeschlossen, so dass mittels des Anschlusselementes eine fluidleitende Verbindung zwischen diesen beiden Rohrleitungen hergestellt wird. In diesem Fall wird die erste Dichtfläche des ersten Bördels der ersten Rohrleitung mittels der Axialbewegung des Anschlussfittings an die zweite Dichtfläche des zweiten Bördels der zweiten Rohrleitung angepresst. Die rückseitige Fläche des zweiten Bördels liegt dann zweckmäßigerweise an der Anschlussfläche des Anschlusselementes an.

Vorzugsweise weist der Anschlussfitting einen Aufnahmekanal für die Rohrleitung auf, welcher Aufnahmekanal bevorzugt zylinderförmig ausgestaltet ist. Es liegt im Rahmen der Erfindung, dass der Bördel als metallischer Bördel durch Kaltformung des Rohrleitungsendes gebildet ist. Gemäß einer bevorzugten Ausführungsform besteht die Rohrleitung und/oder der Bördel im Wesentlichen aus Stahl. Es versteht sich, dass der Bördel einen größeren Durchmesser als die übrige Rohrleitung besitzt.

Dass die Dichtfläche mittels der Axialbewegung des Anschlussfittings an die Anschlussfläche anpressbar ist, meint im Rahmen der Erfindung insbesondere, dass der Anschlussfitting in Längsrichtung der anzuschließenden Rohrleitung zum Anschlusselement bewegbar ist. Die Dichtfläche des Bördels wird durch die Axialbewegung fluiddicht gegen die Anschlussfläche des Anschlusselementes gepresst. Das erfindungsgemäße Anschlagelement gewährleistet, dass eine weitere Erhöhung des Anpressdruckes von dem Anschlussfitting auf den Bördel vermieden wird, wenn das Anschlagelement im montierten Zustand der Rohranschlusseinrichtung zwischen Anschlussfitting und Anschlusselement angeordnet ist bzw. sobald nach bevorzugter Ausführungsform der Erfindung das Anschlagelement kraftschlüssig in Kontakt mit dem Anschlusselement steht.

Gemäß einer bevorzugten Ausführungsform der Erfindung ist der Anschlussfitting unter Ausübung einer Drehbewegung bzw. durch Einschrauben in das Anschlusselement in Axialrichtung bewegbar. Empfohlenermaßen weist der Anschlussfitting ein Außengewinde auf und das Anschlusselement weist ein zu dem Außengewinde komplementäres Innengewinde auf. Es liegt im Rahmen der Erfindung, dass der Anschlussfitting in das Anschlusselement einschraubbar ist, bis nach bevorzugter Ausführungsform das Anschlagelement kraftschlüssig an der Anschlussfläche anliegt und ein weiteres Einschrauben und Verschieben des Anschlussfittings in Axialrichtung bzw. Längsrichtung der Rohrleitung bzw. des Aufnahmekanals verhindert.

Zur Herstellung des montierten Zustands wird der Anschlussfitting bevorzugt in das Anschlusselement eingeschraubt, so dass die Pressfläche des Anschlussfittings in Richtung der Anschlussfläche des Anschlusselementes vorgeschoben wird. Beim Einschrauben des Anschlussfittings wird die Pressfläche in Kontakt mit der rückseitigen Fläche des Bördels gebracht, so dass die Dichtfläche des Bördels fluiddicht gegen die Anschlussfläche des Anschlusselementes gepresst wird und der Bördel vorzugsweise schließlich verformt bzw. elastisch verformt wird. Es liegt im Rahmen der Erfindung, dass auf diese Weise eine Verbindung zwischen der an dem Anschlussfitting angeschlossenen Rohrleitung und der weiteren Rohrleitung hergestellt wird. Durch das Einbringen bzw. Einschrauben des Anschlussfittings in das Anschlusselement wird gemäß bevorzugter Ausführungsform das Anschlagelement zur Anlage an die Anschlussfläche gebracht, so dass ein weiteres Vorschieben bzw. Einschrauben des Anschlussfittings in dem Anschlusselement sowie ein weiteres Verformen des Bördels nicht mehr möglich ist.

Es ist möglich, dass der Anschlussfitting und/oder das Anschlusselement zumindest bereichsweise und vorzugsweise vollständig mit einer Beschichtung versehen sind. Beispielsweise kann als Beschichtung ein galvanischer Überzug und/oder ein Gleitmittel auf dem Anschlussfitting und/oder auf dem Anschlusselement vorgesehen sein.

Gemäß einer Ausführungsform erstreckt sich das Anschlagelement zumindest über einen stirnseitigen Umfangsabschnitt des Anschlussfittings. Es ist auch möglich, dass an der Stirnseite des Anschlussfittings eine Mehrzahl von Anschlagelementen angeordnet ist. Vorzugsweise ist das zumindest eine Anschlagelement einstückig an den Anschlussfitting angeschlossen bzw. angeformt.

In einer bevorzugten Ausführungsform ist das Anschlagelement ringförmig bzw. im Wesentlichen ringförmig ausgebildet und umgibt die Pressfläche des Anschlussfittings vollständig bzw. im Wesentlichen vollständig. Es liegt im Rahmen der Erfindung, dass die Pressfläche quer bzw. senkrecht zur Längsachse des Anschlussfittings orientiert ist. Gemäß einer Ausführungsform des Anschlussfittings ist die Pressfläche schräg zur Längsachse des Anschlussfittings bzw. zur Längsachse des Aufnahmekanals angeordnet. In einer weiteren Ausführungsform des Anschlussfittings ist die Pressfläche kugelschalenförmig ausgebildet. Es liegt im Rahmen der Erfindung, dass die rückseitige Fläche des Bördels komplementär zu der Pressfläche des Anschlussfittings ausgestaltet ist.

Es liegt fernerhin im Rahmen der Erfindung, dass das ringförmige Anschlagelement als kragenförmiger, die Pressfläche umschließender Hohlzylinderabschnitt ausgebildet ist. Empfohlenermaßen weist das Anschlagelement im (noch) nicht montierten Zustand der Rohranschlusseinrichtung eine maximale axiale Länge auf, die kleiner ist bzw. wenig kleiner ist, als die axiale Länge des Bördels. Axiale Länge meint hier die Ausdehnung des Anschlagelementes bzw. des Bördels in Längsrichtung des Anschlussfittings bzw. der anzuschließenden Rohrleitung.

Beim Montieren des Anschlussfittings an dem Anschlusselement bzw. beim Einschrauben des Anschlussfittings in das Anschlusselement trifft die stirnseitige Pressfläche des Anschlussfittings auf die rückseitige Fläche des Bördels und beaufschlagt den Bördel mit Druck. Beim weiteren Einbringen bzw. Einschrauben des Anschlussfittings wird der Bördel elastisch verformt. Bei weiterer Einwirkung der stirnseitigen Pressfläche auf die rückseitige Fläche des Bördels wird der Bördel nach der elastischen Verformung schließlich plastisch verformt. Zweckmäßigerweise soll im Rahmen der Erfindung eine übermäßige plastische Verformung des Bördels, die zu einer Materialschädigung führt, vermieden bzw. weitgehend reduziert werden. Hierzu ist das erfindungsgemäße Anschlagelement vorgesehen. Dadurch, dass das Anschlagelement beim weiteren Einbringen bzw. Einschrauben des Anschlussfittings gemäß bevorzugter Ausführungsform an der Anschlussfläche des Anschlusselementes zur Anlage kommt, wird eine weitere Beaufschlagung bzw. Druckbeaufschlagung des Bördels vermieden, so dass es empfohlenermaßen zu keiner plastischen Verformung des Bördels bzw. zu keiner übermäßigen materialschädigenden plastischen Verformung des Bördels kommt. Gemäß einer Ausführungsform der erfindungsgemäßen Anschlusseinrichtung ist die axiale Länge des Anschlagelementes mit der Maßgabe bemessen, dass der Bördel lediglich elastisch verformt ist, wenn das Anschlagelement zur Anlage an die Anschlussfläche gebracht ist. Die Höhe des Anpressdruckes, den die Pressfläche des Anschlussfittings beim Montieren auf die rückseitige Fläche des Bördels ausübt, ist durch die axiale Länge des Anschlagelementes und/oder die axiale Länge des Bördels einstellbar. Beispielsweise bewirkt eine Vergrößerung der axialen Länge des Anschlagelementes eine Verminderung des Anpressdrucks wenn die axiale Länge des Bördels unverändert bleibt. Eine übermäßige plastische Verformung des Bördels wird zweckmäßigerweise durch die Anpassung der axialen Länge des Anschlagelementes vermieden bzw. ausgeschlossen.

Empfohlenermaßen liegt zumindest ein Abschnitt der rückseitigen Fläche des Bördels an der Pressfläche des Anschlussfittings an, wenn das Anschlagelement gemäß bevorzugter Ausführungsform zur Anlage an die Anschlussfläche gebracht ist und die Dichtfläche des Bördels an die Anschlussfläche des Anschlusselementes gepresst wird. Vorzugsweise liegt die rückseitige Fläche des Bördels über den gesamten Umfang des Bördels bzw. im Wesentlichen über den gesamten Umfang des Bördels formschlüssig und zweckmäßigerweise kraftschlüssig an der Pressfläche an.

Gemäß einer vorteilhaften Ausführungsform der Erfindung liegt der Bördel im montierten Zustand der Rohranschlusseinrichtung zumindest über einen Umfangsabschnitt und vorzugweise vollumfänglich an einer Innenfläche des ringförmigen Anschlagelementes an. Empfohlenermaßen erfolgt beim Montieren eine elastische Verformung des Bördels mit der Maßgabe, dass der Bördel im montierten Zustand formschlüssig und/oder kraftschlüssig an der Innenfläche des ringförmigen Anschlagelementes anliegt.

Nach einer bevorzugten Ausführungsform weist der Bördel an seiner Stirnseite eine konusförmige Dichtfläche auf. Vorzugsweise weist das Anschlusselement eine konusförmige Anschlussfläche zur formschlüssigen Anlage des Bördels auf. Zweckmäßigerweise ist die Dichtfläche komplementär konusförmig zu der Anschlussfläche des Anschlusselementes ausgebildet. Empfohlenermaßen ist im noch nicht vollständig montierten Zustand der von der konusförmigen Anschlussfläche und der Längsachse des Aufnahmekanals bzw. der Längsachse der Rohrleitung gebildete Winkel größer als der von der konusförmigen Dichtfläche des Bördels und der Längsachse des Aufnahmekanals bzw. der Längsachse der Rohrleitung gebildete Winkel. Es liegt im Rahmen der Erfindung, dass der Winkel zwischen der konusförmigen Anschlussfläche und der Längsachse der Rohrleitung 20° bis 80°, bevorzugt 30° bis 70° und besonders bevorzugt 60° bzw. ungefähr 60° beträgt. Zweckmäßigerweise beträgt der Winkel zwischen der konusförmigen Dichtfläche und der Längsachse der Rohrleitung 20° bis 80°, bevorzugt 30° bis 70° und besonders bevorzugt 55° bis 60°. Grundsätzlich ist es möglich, dass der Winkel zwischen der konusförmigen Anschlussfläche und der Längsachse der Rohrleitung und der Winkel zwischen der konusförmigen Dichtfläche und der Längsachse der Rohrleitung gleich groß bzw. ungefähr gleich groß ist.

Im montierten Zustand der Rohranschlusseinrichtung liegt gemäß bevorzugter Ausführungsform eine stirnseitige Anlagefläche des Anschlagelementes an der Anschlussfläche des Anschlusselementes an. Nach einer Variante ist diese stirnseitige Anlagefläche des Anschlagelementes konisch ausgebildet und liegt im montierten Zustand auf der vorzugsweise konusförmigen Anschlussfläche auf. Zweckmäßigerweise sind die Anlagefläche und die Anschlussfläche komplementär konusförmig ausgebildet. Es liegt im Rahmen der Erfindung, dass der von der Anlagefläche und/oder der Anschlussfläche mit der Längsachse des Aufnahmekanals gebildete Winkel 15° bis 85°, vorzugsweise 25° bis 75°, und besonders bevorzugt 55° bis 60° beträgt.

Gemäß einer weiteren Ausführungsform der Erfindung ist die Anlagefläche des Anschlagelementes senkrecht bzw. im Wesentlichen senkrecht zur Längsachse des Aufnahmekanals orientiert, wobei die Anschlussfläche eine senkrecht bzw. im Wesentlichen senkrecht zur Längsachse des Aufnahmekanals orientierte Lagerfläche aufweist, auf welcher Lagerfläche die Anlagefläche des Anschlagelementes im montierten Zustand aufliegt. Zweckmäßigerweise bildet die Lagerfläche einen ringförmigen, senkrecht bzw. im Wesentlichen senkrecht zur Längsachse des Aufnahmekanals angeordneten Flächenbereich der Anschlussfläche.

Es liegt im Rahmen der Erfindung, dass an das Anschlusselement eine zweite Rohrleitung angeschlossen ist, die mit der ersten, von dem Anschlussfitting umgebenen Rohrleitung mittels der Rohranschlusseinrichtung verbunden ist. Gemäß einer Ausführungsform ist in das Anschlusselement ein Rohrleitungsabschnitt integriert, der die Anschlussfläche für die erste Rohrleitung mit einer zweiten Anschlussfläche für die zweite Rohrleitung verbindet.

Zweckmäßigerweise ist an einem Rohrleitungsende der zweiten Rohrleitung ein zweiter Bördel mit einer zweiten Dichtfläche angeformt, der mit einem zweiten Anschlussfitting gegen die zweite Anschlussfläche des Anschlusselementes mit der Maßgabe gepresst wird, dass die zweite Dichtfläche des zweiten Bördels fluiddicht auf der weiteren Anschlussfläche aufliegt. Die Ausgestaltung des zweiten Anschlussfittings entspricht in einer bevorzugten Ausführungsform der Ausgestaltung des ersten Anschlussfittings. Es empfiehlt sich, dass der zweite Anschlussfitting in Axialrichtung bzw. in Axialrichtung der zweiten Rohrleitung in Richtung der zweiten Anschlussfläche vorgeschoben und vorzugsweise in das Anschlusselement eingeschraubt wird, wodurch die Rückseite des zweiten Bördels mit einer Anpresskraft beaufschlagt wird, so dass die zweite Dichtfläche des zweiten Bördels gegen die zweite Anschlussfläche gepresst wird und der zweite Bördel empfohlenermaßen im Wesentlichen elastisch verformt wird und zumindest übermäßige plastische Verformungen vermieden werden. Vorzugsweise ist das Vorschieben bzw. Einschrauben des zweiten Anschlussfittings so lange möglich, bis ein zweites Anschlagelement des zweiten Anschlussfittings zur zweckmäßigerweise kraftschlüssigen Anlage an die zweite Anschlussfläche gebracht ist und ein weiteres Verschieben des zweiten Anschlussfittings verhindert. Bevorzugt wird dadurch eine übermäßige plastische Verformung des zweiten Bördels ausgeschlossen. Im Ergebnis wird eine fluiddichte Verbindung zwischen der ersten Rohrleitung über den vorzugsweise in das Anschlusselement integrierten Rohrleitungsabschnitt mit der zweiten Rohrleitung hergestellt.

Nach einer anderen Ausführungsform der Erfindung wird eine Verbindung zwischen einer ersten und einer zweiten Rohrleitung mittels lediglich eines Anschlussfittings hergestellt. Dabei umgibt der Anschlussfitting die anzuschließende erste Rohrleitung und im montierten Zustand liegt die stirnseitige Pressfläche des Anschlussfittings an der rückseitigen Fläche des Bördels der ersten Rohrleitung an. Die zweite Rohrleitung weist an ihrem Rohrleitungsende einen zweiten Bördel auf. Im montierten Zustand durchfasst die zweite Rohrleitung das Anschlusselement und der zweite Bördel liegt mit seiner rückseitigen Fläche an der Anschlussfläche des Anschlusselementes an. In diesem montierten Zustand wird der erste Bördel bzw. die Dichtfläche des ersten Bördels von dem Anschlussfitting an den zweiten Bördel bzw. an die Dichtfläche des zweiten Bördels gepresst. Der Anschlussfitting beaufschlagt also beide aneinander liegende Bördel mit Druck und dabei wird die rückseitige Fläche des zweiten Bördels an die Anschlussfläche gepresst. Das Einbringen bzw. Einschrauben des Anschlussfittings wird auch bei dieser Ausführungsform vorzugsweise durch das am Anschlussfitting angeschlossene und an der Anschlussfläche des Anschlusselementes zur Anlage bringbaren Anlageelement begrenzt bzw. unterbrochen. Im montierten Zustand umgibt das Anlageelement zweckmäßigerweise sowohl den ersten Bördel als auch den am ersten Bördel anliegenden zweiten Bördel. Zweckmäßigerweise ist die zweite Dichtfläche des zweiten Bördels komplementär zu der Dichtfläche des ersten Bördels ausgebildet. Gemäß einer besonders bevorzugten Ausführungsform ist die axiale Länge des Anschlagelementes mit der Maßgabe bemessen, dass der erste Bördel und/oder der zweite Bördel beim Einbringen bzw. Einschrauben des Anschlussfittings im Wesentlichen elastisch verformt wird und zumindest eine übermäßige plastische Verformung vermieden wird.

Vorzugsweise ist der an die erste Rohrleitung und/oder die zweite Rohrleitung angeformte Bördel ein E-Bördel oder ein F-Bördel. Empfohlenermaßen ist an die zweite Rohrleitung ein zu dem Bördel der ersten Rohrleitung komplementärer Bördel angeformt. Beispielsweise ist an die erste Rohrleitung ein F-Bördel und an die zweite Rohrleitung ein E-Bördel angeformt.

Es liegt im Rahmen der Erfindung, dass das Innengewinde des Anschlusselementes in einer Sackbohrung in dem Anschlusselement angeordnet ist. Es ist möglich, dass das Anschlusselement als Schraubenmutter ausgebildet ist, in die der Anschlussfitting zur Herstellung des montierten Zustands der Rohranschlusseinrichtung einschraubbar ist.

Der Erfindung liegt die Erkenntnis zugrunde, dass mit der erfindungsgemäßen Rohranschlusseinrichtung auf einfache Weise eine Verbindung zwischen einer Rohrleitung und einem Anschlusselement bzw. einer zweiten Rohrleitung herstellbar ist, wobei Leckagen der Rohrleitungsverbindung funktionssicher vermieden werden können. Der Erfindung liegt insbesondere die Erkenntnis zugrunde, dass beim Einbringen bzw. Einschrauben des Anschlussfittings und beim Anpressen des Anschlussfittings an den Bördel der Rohrleitung für eine optimale Dichtwirkung eine elastische Verformung des Bördels zugelassen werden kann, während eine übermäßige plastische Verformung des Bördels vermieden wird, um Beschädigungen und Leckagen der Rohrleitungsverbindung auszuschließen. Aufgrund des erfindungsgemäßen Anschlagelementes kann diese optimale Dichtwirkung überraschend einfach und effektiv erreicht werden. Insbesondere bei dem Einsatz eines als Schraubfitting ausgebildeten Anschlussfittings verhindert das Anschlagelement ein Überdrehen des Anschlussfittings, so dass ein übermäßiges plastisches Verformen des Bördels zuverlässig vermieden wird. Im Ergebnis zeichnet sich die erfindungsgemäße Rohranschlusseinrichtung nicht nur durch eine zuverlässige Montierbarkeit, sondern auch durch eine hohe Betriebssicherheit aus. Wesentlich an der Erfindung ist, dass durch die Ausgestaltung des erfindungsgemäß vorgesehenen Anschlagelementes ein Bördel genau einstellbar elastisch verformt wird, wodurch der Anpressdruck des Bördels gegen eine Anschlussfläche optimal justierbar ist. Dabei verhindert die erfindungsgemäße Ausbildung des Anschlagelementes selbst dann eine die Zerstörung des Bördels bedingende plastische Verformung, wenn der Anschlussfitting durch das Einwirken einer überhöhten Kraft axial bewegt bzw. in das Anschlusselement eingeschraubt wird. Darüber hinaus liegt der Erfindung die Erkenntnis zugrunde, dass eine erfindungsgemäße Rohranschlusseinrichtung problemlos in bestehende Rohrleitungssysteme integriert werden kann. Nichtsdestotrotz zeichnet sich die erfindungsgemäße Vorrichtung durch einen überraschend einfachen Aufbau aus und bietet gegenüber den aus der Praxis bekannten Rohranschlusseinrichtungen die vorstehend genannten Vorteile.

Nachfolgend wird die Erfindung anhand einer lediglich ein Ausführungsbeispiel darstellenden Zeichnung näher erläutert. Es zeigen in schematischer Darstellung:

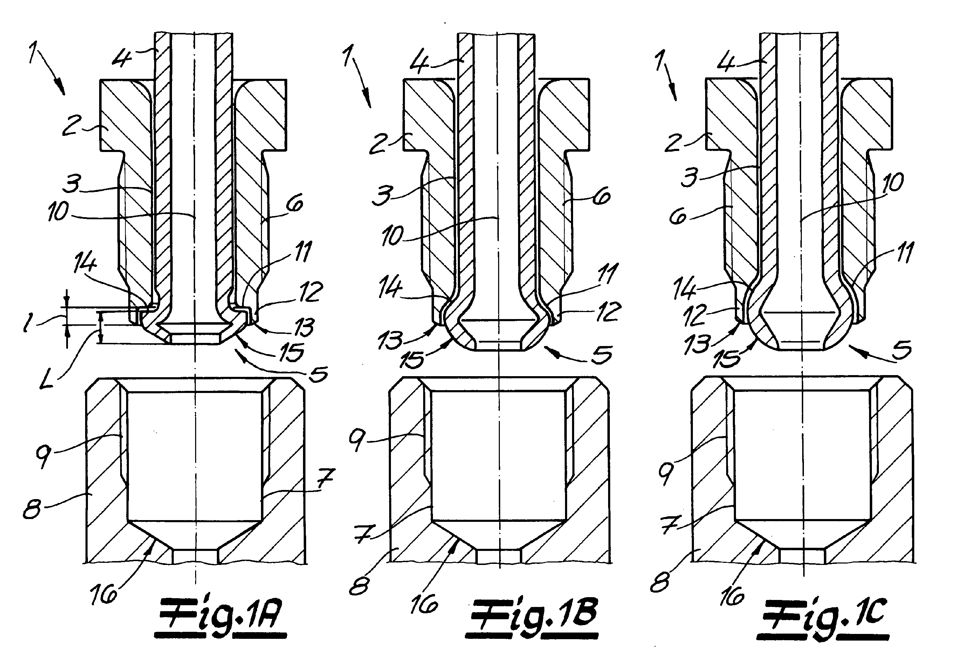

Fig. 1 a einen Querschnitt einer erfindungsgemäßen Rohranschlusseinrichtung im nicht montierten Zustand in einer ersten Ausführungsform,
Fig. 1b einen Querschnitt einer erfindungsgemäßen Rohranschlusseinrichtung im nicht montierten Zustand in einer zweiten Ausführungsform,
Fig. 1 c einen Querschnitt einer erfindungsgemäßen Rohranschlusseinrichtung im nicht montierten Zustand in einer dritten Ausführungsform,
Fig. 2a einen Querschnitt einer erfindungsgemäßen Rohranschlusseinrichtung im montierten Zustand in der ersten Ausführungsform,
Fig. 2b einen Querschnitt einer erfindungsgemäßen Rohranschlusseinrichtung im montierten Zustand in einer vierten Ausführungsform und
Fig. 3 einen Querschnitt einer erfindungsgemäßen Rohranschlusseinrichtung im montierten Zustand in einer weiteren Ausführungsform.

Fig. 1 a bis 1 c zeigen eine Rohranschlusseinrichtung 1 mit einem Anschlussfitting 2, der einen Aufnahmekanal 3 für eine Rohrleitung 4 aufweist. In dem Ausführungsbeispiel gemäß Fig. 1a bis 1c ist in dem Aufnahmekanal 3 eine Rohrleitung 4 mit einem Bördel 5 angeordnet. Der Anschlussfitting 2 weist hier ein Außengewinde 6 auf, das bei der Montage in eine Bohrung 7 eines Anschlusselementes 8 mit Innengewinde 9 eingeschraubt wird. Durch dieses Einschrauben wird der Anschlussfitting 2 in Axialrichtung bzw. entlang einer Längsachse 10 der Rohrleitung 4 bzw. des Aufnahmekanals 3 bewegt.

Gemäß den Ausführungsbeispielen nach den Fig. 1a bis 1c weist der Anschlussfitting 2 eine stirnseitige Pressfläche 11 auf, aus der ein ringförmiges Anschlagelement 12 vorsteht und die von dem ringförmigen Anschlagelement 12 umgeben ist. Das ringförmige Anschlagelement 12 weist gemäß den Fig. 1a bis 1 c eine stirnseitige Anlagefläche 13 auf, die konisch ausgebildet ist. In den Fig. 1 a bis 1 c ist erkennbar, dass die axiale Länge I des ringförmigen Anschlagelementes 12 in Richtung der Längsachse 10 des Aufnahmekanals 3 bzw. der Rohrleitung 4 im nicht montierten Zustand der Rohranschlusseinrichtung 1 kleiner ist als die axiale Länge L des Bördels 5 in Richtung der Längsachse 10.

Fig. 1 a zeigt einen F-Bördel 5 mit einer rückseitigen Fläche 14, die senkrecht zur Längsachse 10 der Rohrleitung 4 orientiert ist und ringförmig ausgestaltet ist. Die rückseitige Fläche 14 des Bördels 5 in Fig. 1b ist schräg zur Längsachse 10 der Rohrleitung 4 orientiert. Gemäß Fig. 1c ist die rückseitige Fläche 14 des Bördels 5 kugelschalenförmig ausgebildet. Vorzugsweise und gemäß den Ausführungsbeispielen in den Fig. 1a bis 1c sind die Dichtflächen 15 der Bördel 5 konisch ausgebildet.

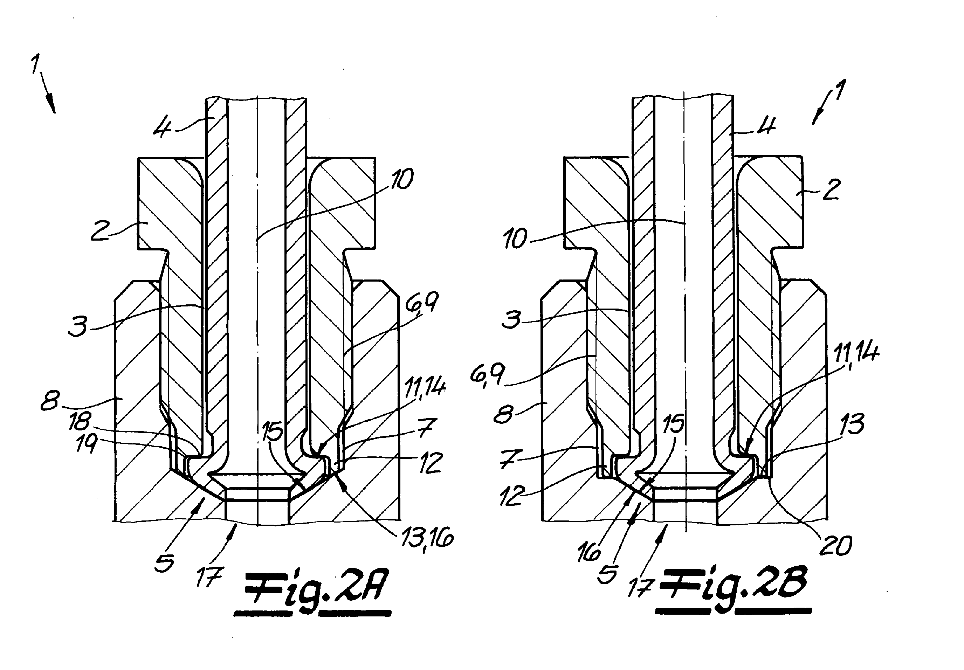

Zur Herstellung des montierten Zustands wird der Anschlussfitting 2 in die Bohrung 7 des Anschlusselementes 8 eingeschraubt, wodurch die Pressfläche 11 des Anschlussfittings 2 zur Anlage an die rückseitige Fläche 14 des Bördels 5 gebracht wird. Durch weiteres Einschrauben des Anschlussfittings 2 in die Bohrung 7 wird die Dichtfläche 15 des Bördels 5 gegen eine Anschlussfläche 16 des Anschlusselementes 8 gepresst und der Bördel 5 wird schließlich elastisch verformt. Der montierte Zustand ist erreicht, wenn der Anschlussfitting 2 so weit in die Bohrung 7 des Anschlusselementes 8 eingeschraubt ist, dass das Anschlagelement 12 kraftschlüssig auf der Anschlussfläche 16 des Anschlusselementes 8 aufliegt. Ein weiteres Einschrauben des Anschlussfittings 2 in die Bohrung 7 des Anschlusselementes 8 wird dadurch ausgeschlossen. Der montierte Zustand der Rohranschlusseinrichtung 1 ist in den Fig. 2a und 2b dargestellt.

Bei den in den Fig. 2a und 2b dargestellten Rohranschlusseinrichtungen 1 ist der Anschlussfitting 2 in die Bohrung 7 des Anschlusselementes 8 vollständig eingeschraubt, so dass das Anschlagelement 12 auf der Anschlussfläche 16 aufliegt. Die Pressfläche 11 liegt an der rückseitigen Fläche 14 des Bördels 5 an und die Dichtfläche 15 des Bördels 5 wird gegen die Anschlussfläche 16 des Anschlusselementes 8 gepresst. Beim Einschrauben des Anschlussfittings wurde der Bördel 5 elastisch verformt, so dass die Dichtfläche 15 des Bördels 5 fluiddicht auf der Anschlussfläche 16 des Anschlusselementes 8 aufliegt. Gemäß den Fig. 2a und 2b ist in das Anschlusselement 8 ein Rohrleitungsabschnitt 17 integriert, so dass im montierten Zustand nach Fig. 2a und 2b eine fluiddichte Verbindung zwischen der Rohrleitung 4 und dem Rohrleitungsabschnitt 17 hergestellt ist.

Nach Fig. 2a ist die Anlagefläche 13 des ringförmigen Anschlagelementes 12 konusförmig ausgebildet und liegt im montierten Zustand der Rohranschlusseinrichtung 1 kraftschlüssig und formschlüssig auf der zur Anlagefläche 13 komplementär konusförmig ausgebildeten Anschlussfläche 16 des Anschlusselementes 8 auf. Dadurch wird ein weiteres Einschrauben des Anschlussfittings 2 in die Bohrung 7 des Anschlusselementes 8 ausgeschlossen.

Weiterhin ist in Fig. 2a dargestellt, dass eine Innenkante 18, die die Pressfläche 11 zu dem Aufnahmekanal 3 hin begrenzt, abgerundet ausgebildet ist. Fernerhin ist in Fig. 2a dargestellt, dass eine Außenkante 19, mit der die Pressfläche 11 an das ringförmige Anschlagelement 12 anstößt, abgerundet ausgebildet ist.

Fig. 2b zeigt eine erfindungsgemäße Rohranschlusseinrichtung 1 in einer vierten Ausführungsform, die sich dadurch von der Rohranschlusseinrichtung 1 gemäß der ersten Ausführungsform unterscheidet, dass die Anlagefläche 13 des Anschlagelementes 12 senkrecht zur Längsachse 10 des Aufnahmekanals 3 orientiert ist. Die Anschlussfläche 16 des Anschlusselementes 8 weist gemäß Fig. 2b eine ringförmige Lagerfläche 20 auf, die ebenfalls senkrecht zur Längsachse 10 des Aufnahmekanals 3 bzw. der Rohrleitung 4 orientiert ist und auf der im montierten Zustand der Rohranschlusseinrichtung 1 das Anschlagelement 12 aufliegt.

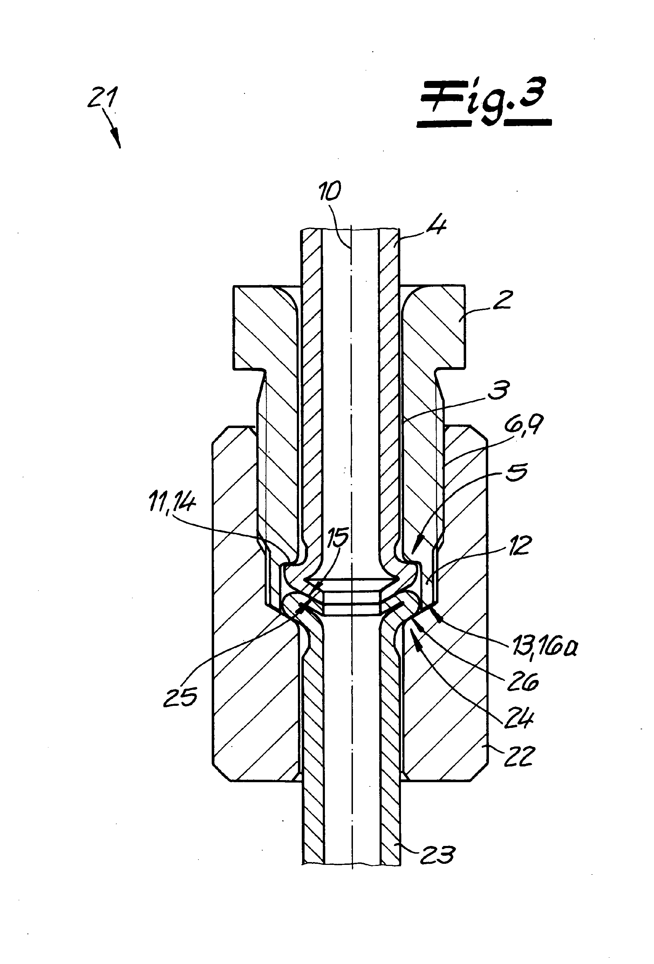

Fig. 3 zeigt eine Rohranschlusseinrichtung 1, die als Schraubverbindung bzw. Schraubverbindungsvorrichtung 21 ausgebildet ist und eine Verbindung zwischen einer ersten Rohrleitung 4 und einer zweiten Rohrleitung 23 ermöglicht. Die erste Rohrleitung 4 weist an ihrem Rohrleitungsende einen F-Bördel 5 auf. In einem als Schraubenmutter 22 ausgebildeten Anschlusselement ist die zweite Rohrleitung 23 mit einem E-Bördel 24 gelagert. Die Schraubenmutter 22 weist ein Innengewinde 9 auf, in das der Anschlussfitting 2 mit dem Außengewinde 6 einschraubbar ist. Der Anschlussfitting 2 umgibt die erste Rohrleitung 4, wobei die Pressfläche 11 des Anschlussfittings 2 an der rückseitigen Fläche 14 des F-Bördels 5 anliegt. Eine Bördelanschlussfläche 25 des E-Bördels 24 ist konusförmig ausgebildet, wobei sich der betreffende Konus nach innen, d. h. zur Rohrseite hin, verjüngt. Der F-Bördel 5 weist ebenfalls eine konusförmige Dichtfläche 15 auf, wobei dieser Konus sich nach außen, d. h. zum Stirnende der Rohrleitung 4 hin verjüngt. Durch Einschrauben des Anschlussfittings 2 wird über die Pressfläche 11 des Anschlussfittings 2 ein Anpressdruck auf die rückseitige Fläche 14 des F-Bördels 5 ausgeübt. Infolgedessen wird die Dichtfläche 15 des F-Bördels 5 fluiddicht gegen die Bördelanschlussfläche 25 des E-Bördels 24 gepresst, dessen Rückseite 26 an der Anschlussfläche 16a der Schraubenmutter 22 anliegt. Im montierten Zustand der Schraubverbindungsvorrichtung 21 ist der Anschlussfitting 2 in die Schraubenmutter 22 eingeschraubt, so dass das Anschlagelement 12 an der Anschlussfläche 16a der Schraubenmutter 22 anliegt und ein weiteres Einschrauben des Anschlussfittings 2 in die Schraubenmutter 22 verhindert. In Fig. 3 ist nicht dargestellt, dass im montierten Zustand der F-Bördel 5 und der E-Bördel 24 lediglich elastisch verformt sind. Die Ausgestaltung des Anschlussfittings 2 nach Fig. 3 entspricht der Ausgestaltung des Anschlussfittings 2 gemäß Fig. 1 a.

## Patentansprüche

1. Rohranschlusseinrichtung für den Anschluss von Rohrleitungen, insbesondere von Kraftfahrzeugrohrleitungen an einem Anschlusselement (8), wobei ein Anschlussfitting (2) vorgesehen ist, der die anzuschließende Rohrleitung (4) im Bereich eines ihrer Rohrleitungsenden umgibt und mit einer stirnseitigen Pressfläche (11) der rückseitigen Fläche (14) eines an dem Rohrleitungsende angeschlossenen Bördels (5) zugewandt ist, wobei der Bördel (5) an seiner Vorderseite eine Dichtfläche (15) aufweist, wobei die Dichtfläche (15) mittels einer Axialbewegung des Anschlussfittings (2) an eine Anschlussfläche (16) des Anschlusselementes (8) oder an eine zweite Dichtfläche eines zweiten Bördels einer zweiten Rohrleitung anpressbar ist, wobei ein Anschlagelement (12) zwischen Anschlussfitting (2) und Anschlussfläche (16) des Anschlusselementes (8) angeordnet ist und wobei dieses Anschlagelement (12) die Axialbewegung des Anschlussfittings (2) begrenzt bzw. unterbricht.

2. Rohranschlusseinrichtung nach Anspruch 1, wobei das Anschlagelement (12) an der Stirnseite des Anschlussfittings (2) angeschlossen ist und bei der Axialbewegung des Anschlussfittings (2) an der Anschlussfläche (16) des Anschlusselementes (8) zur Anlage bringbar ist.

3. Rohranschlusseinrichtung nach Anspruch 1, wobei das Anschlagelement (12) an der Anschlussfläche (16) des Anschlusselementes (8) angeschlossen ist.

4. Rohranschlusseinrichtung nach Anspruch 1, wobei das Anschlagelement (12) als separates Anschlagelement (12) zwischen Anschlussfitting (2) und Anschlussfläche (16) angeordnet ist.

5. Rohranschlusseinrichtung nach einem der Ansprüche 1 bis 4, wobei der Anschlussfitting (2) mit seiner stirnseitigen Pressfläche (11) an der rückseitigen Fläche (14) des Bördels (5) anliegt.

6. Rohranschlusseinrichtung nach einem der Ansprüche 3 oder 4, wobei das Anschlagelement (12) bzw. ein Teil des Anschlagelementes (12) zwischen der stirnseitigen Pressfläche (11) des Anschlussfittings (2) und der rückseitigen Fläche (14) des Bördels (5) angeordnet ist.

7. Rohranschlusseinrichtung nach einem der Ansprüche 1 bis 6, wobei der Anschlussfitting (2) ein Außengewinde (6) aufweist und das Anschlusselement (8) ein zu dem Außengewinde (6) komplementäres Innengewinde (9) aufweist und wobei der Anschlussfitting (2) ein das Anschlusselement (8) einschraubbar ist.

8. Rohranschlusseinrichtung nach einem der Ansprüche 1 bis 7, wobei das Anschlagelement (12) ringförmig ausgebildet ist und im montierten Zustand die Pressfläche (11) des Anschlussfittings (2) vollständig bzw. im Wesentlichen vollständig umgibt.

9. Rohranschlusseinrichtung nach einem der Ansprüche 1 bis 8, wobei das Anschlagelement (12) eine axiale Länge aufweist, die kleiner als die axiale Länge des Bördels (5) ist.

10. Rohranschlusseinrichtung nach einem der Ansprüche 1 bis 9, wobei die axiale Länge des Anschlagelementes (12) mit der Maßgabe bemessen ist, dass der Bördel (5) im montierten Zustand elastisch bzw. vorwiegend elastisch verformt ist.

11. Rohranschlusseinrichtung nach einem der Ansprüche 8 bis 10, wobei der Bördel (5) zumindest über einen Umfangsabschnitt und vorzugsweise voll umfänglich an einer Innenfläche des ringförmigen Anschlagelementes (12) anliegt, wenn im montierten Zustand die Dichtfläche (15) gegen die Anschlussfläche (16) gepresst ist.

12. Rohranschlusseinrichtung nach einem der Ansprüche 1 bis 11, wobei der Bördel (5) eine konusförmige oder kugelschalenförmige Dichtfläche (15) aufweist und wobei das Anschlusselement (8) eine konusförmige oder kugelschalenförmige Anschlussfläche (16) zur formschlüssigen Aufnahme des Bördels (5) aufweist.

13. Rohranschlusseinrichtung nach einem der Ansprüche 1, 2 oder 4 bis 12, wobei eine von einer Stirnseite des Anschlagelementes (12) gebildete Anlagefläche (13) konisch ausgebildet ist und auf der konusförmigen Anschlussfläche (16) aufliegt, wenn der Anschlussfitting (2) die Dichtfläche (15) gegen die Anschlussfläche (16) presst.

14. Rohranschlusseinrichtung nach einem der Ansprüche 1, 2 oder 4 bis 12, wobei die Anlagefläche (13) des Anschlagelementes (12) senkrecht bzw. im Wesentlichen senkrecht zur Längsachse (10) des Aufnahmekanals (3) orientiert ist und wobei die Anschlussfläche (16) eine senkrecht bzw. im Wesentlichen senkrecht zur Längsachse (10) des Aufnahmekanals (3) orientierte Lagerfläche (20) aufweist, auf welcher Lagerfläche (20) die Anlagefläche (13) des Anschlagelementes (12) aufliegt, wenn der Anschlussfitting (2) die Dichtfläche (15) gegen die Anschlussfläche (16) presst.

15. Rohranschlusseinrichtung nach einem der Ansprüche 1 bis 14, wobei an das Anschlusselement (8) eine zweite Rohrleitung angeschlossen ist.

16. Rohranschlusseinrichtung nach einem der Ansprüche 7 bis 15, wobei das Außengewinde (6) des Anschlussfittings (2) im montierten Zustand in eine Sackbohrung (7) des Anschlusselementes (8) mit komplementärem Innengewinde (9) eingeschraubt ist.

17. Rohranschlusseinrichtung nach einem der Ansprüche 1 bis 16, wobei der Bördel der Rohrleitung und/oder der zweiten Rohrleitung ein E-Bördel oder F-Bördel (5) ist.

## Geänderte Patentansprüche

### Geänderte Patentansprüche gemäss Regel 137(2) EPÜ.

**1.** Rohranschlusseinrichtung für den Anschluss von Rohrleitungen, insbesondere von Kraftfahrzeugrohrleitungen an einem Anschlusselement (8), wobei ein Anschlussfitting (2) vorgesehen ist, der die anzuschließende Rohrleitung (4) im Bereich eines ihrer Rohrleitungsenden umgibt und mit einer stirnseitigen Pressfläche (11) der rückseitigen Fläche (14) eines an dem Rohrleitungsende angeschlossenen Bördels (5) zugewandt ist, wobei der Bördel (5) an seiner Vorderseite eine Dichtfläche (15) aufweist, wobei die Dichtfläche (15) mittels einer Axialbewegung des Anschlussfittings (2) an eine Anschlussfläche (16) des Anschlusselementes (8) oder an eine zweite Dichtfläche eines zweiten Bördels einer zweiten Rohrleitung anpressbar ist, wobei ein Anschlagelement (12) zwischen Anschlussfitting (2) und Anschlussfläche (16) des Anschlusselementes (8) angeordnet ist und wobei dieses Anschlagelement (12) die Axialbewegung des Anschlussfittings (2) begrenzt bzw. unterbricht und wobei das Anschlagelement (12) an der Stirnseite des Anschlussfittings (2) angeschlossen ist und bei der Axialbewegung des Anschlussfittings (2) an der Anschlussfläche (16) des Anschlusselementes (8) zur Anlage bringbar ist.

**2.** Rohranschlusseinrichtung für den Anschluss von Rohrleitungen, insbesondere von Kraftfahrzeugrohrleitungen an einem Anschlusselement (8), wobei ein Anschlussfitting (2) vorgesehen ist, der die anzuschließende Rohrleitung (4) im Bereich eines ihrer Rohrleitungsenden umgibt und mit einer stirnseitigen Pressfläche (11) der rückseitigen Fläche (14) eines an dem Rohrleitungsende angeschlossenen Bördels (5) zugewandt ist, wobei der Bördel (5) an seiner Vorderseite eine Dichtfläche (15) aufweist, wobei die Dichtfläche (15) mittels einer Axialbewegung des Anschlussfittings (2) an eine Anschlussfläche (16) des Anschlusselementes (8) oder an eine zweite Dichtfläche eines zweiten Bördels einer zweiten Rohrleitung anpressbar ist, wobei ein Anschlagelement (12) zwischen Anschlussfitting (2) und Anschlussfläche (16) des Anschlusselementes (8) angeordnet ist und wobei dieses Anschlagelement (12) die Axialbewegung des Anschlussfittings (2) begrenzt bzw. unterbricht, wobei das Anschlagelement (12) an der Anschlussfläche (16) des Anschlusselementes (8) angeschlossen ist und wobei durch eine Axialbewegung des Anschlussfittings die Stirnseite des Anschlussfittings (2) zur Anlage an dem Anschlagelement (12) des Anschlusselementes (8) gelangt und **dadurch** die Axialbewegung des Anschlussfittings (2) begrenzt bzw. unterbrochen wird.

**3.** Rohranschlusseinrichtung für den Anschluss von Rohrleitungen, insbesondere von Kraftfahrzeugrohrleitungen an einem Anschlusselement (8), wobei ein Anschlussfitting (2) vorgesehen ist, der die anzuschließende Rohrleitung (4) im Bereich eines ihrer Rohrleitungsenden umgibt und mit einer stirnseitigen Pressfläche (11) der rückseitigen Fläche (14) eines an dem Rohrleitungsende angeschlossenen Bördels (5) zugewandt ist, wobei der Bördel (5) an seiner Vorderseite eine Dichtfläche (15) aufweist, wobei die Dichtfläche (15) mittels einer Axialbewegung des Anschlussfittings (2) an eine Anschlussfläche (16) des Anschlusselementes (8) oder an eine zweite Dichtfläche eines zweiten Bördels einer zweiten Rohrleitung anpressbar ist, wobei ein Anschlagelement (12) zwischen Anschlussfitting (2) und Anschlussfläche (16) des Anschlusselementes (8) angeordnet ist und wobei dieses Anschlagelement (12) die Axialbewegung des Anschlussfittings (2) begrenzt bzw. unterbricht, wobei das Anschlusselement (12) als separates Anschlagelement (12) zwischen Anschlussfitting (2) und Anschlussfläche (16) angeordnet ist und wobei das Anschlagelement (12) bzw. ein Teil des Anschlagelementes (12) zwischen der stirnseitigen Pressfläche (11) des Anschlussfittings (2) und der rückseitigen Fläche (14) des Bördels (5) angeordnet ist.

**4.** Rohranschlusseinrichtung nach Anspruch 2, wobei das Anschlagelement (12) bzw. ein Teil des Anschlagelementes (12) zwischen der stirnseitigen Pressfläche (11) des Anschlussfittings (2) und der rückseitigen Fläche (14) des Bördels (5) angeordnet ist.

**5.** Rohranschlusseinrichtung nach einem der Ansprüche 1 bis 4, wobei der Anschlussfitting (2) ein Außengewinde (6) aufweist und das Anschlusselement (8) ein zu dem Außengewinde (6) komplementäres Innengewinde (9) aufweist und wobei der Anschlussfitting (2) ein das Anschlusselement (8) einschraubbar ist.

**6.** Rohranschlusseinrichtung nach einem der Ansprüche 1 bis 5, wobei das Anschlagelement (12) ringförmig ausgebildet ist und im montierten Zustand die Pressfläche (11) des Anschlussfittings (2) vollständig bzw. im Wesentlichen vollständig umgibt.

**7.** Rohranschlusseinrichtung nach einem der Ansprüche 1 bis 6, wobei das Anschlagelement (12) eine axiale Länge aufweist, die kleiner als die axiale Länge des Bördels (5) ist.

**8.** Rohranschlusseinrichtung nach einem der Ansprüche 1 bis 7, wobei die axiale Länge des Anschlagelementes (12) mit der Maßgabe bemessen ist, dass der Bördel (5) im montierten Zustand elastisch bzw. vorwiegend elastisch verformt ist.

**9.** Rohranschlusseinrichtung nach einem der Ansprüche 6 bis 8, wobei der Bördel (5) zumindest über einen Umfangsabschnitt und vorzugsweise voll umfänglich an einer Innenfläche des ringförmigen Anschlagelementes (12) anliegt, wenn im montierten Zustand die Dichtfläche (15) gegen die Anschlussfläche (16) gepresst ist.

**10.** Rohranschlusseinrichtung nach einem der Ansprüche 1 bis 9, wobei der Bördel (5) eine konusförmige oder kugelschalenförmige Dichtfläche (15) aufweist und wobei das Anschlusselement (8) eine konusförmige oder kugelschalenförmige Anschlussfläche (16) zur formschlüssigen Aufnahme des Bördels (5) aufweist.

**11.** Rohranschlusseinrichtung nach einem der Ansprüche 1 oder 3 bis 10, wobei eine von einer Stirnseite des Anschlagelementes (12) gebildete Anlagefläche (13) konisch ausgebildet ist und auf der konusförmigen Anschlussfläche (16) aufliegt, wenn der Anschlussfitting (2) die Dichtfläche (15) gegen die Anschlussfläche (16) presst.

**12.** Rohranschlusseinrichtung nach einem der Ansprüche 1 oder 3 bis 10, wobei die Anlagefläche (13) des Anschlagelementes (12) senkrecht bzw. im Wesentlichen senkrecht zur Längsachse (10) des Aufnahmekanals (3) orientiert ist und wobei die Anschlussfläche (16) eine senkrecht bzw. im Wesentlichen senkrecht zur Längsachse (10) des Aufnahmekanals (3) orientierte Lagerfläche (20) aufweist, auf welcher Lagerfläche (20) die Anlagefläche (13) des Anschlagelementes (12) aufliegt, wenn der Anschlussfitting (2) die Dichtfläche (15) gegen die Anschlussfläche (16) presst.

**13.** Rohranschlusseinrichtung nach einem der Ansprüche 1 bis 12, wobei an das Anschlusselement (8) eine zweite Rohrleitung angeschlossen ist.

**14.** Rohranschlussfitting nach einem der Ansprüche 5 bis 13, wobei das Außengewinde (6) des Anschlussfittings (2) im montierten Zustand in eine Sackbohrung (7) des Anschlusselementes (8) mit komplementären Innengewinde (9) eingeschraubt ist.

**15.** Rohranschlusseinrichtung nach einem der Ansprüche 1 bis 16, wobei der Bördel der Rohrleitung und/oder der zweiten Rohrleitung ein E-Bördel oder ein F-Bördel ist.
